# EUROPEAN PATENT APPLICATION

(11) **EP 4 631 344 A1**
(43) Date of publication of application: **15.10.2025**
(21) Application number: 25168905.5
(22) Date of filing: 07.04.2025
(51) Int. Cl.: A01D 42/00, B62D 51/02

(54) **RESIDENTIAL BATTERY-POWERED STAND-ON UTILITY VEHICLE**

(30) Priority: 08.04.2024 US 202463575966 P
(71) Applicant: MTD Products Inc, Valley City, OH 44280-2711 (US)
(72) Inventor: ROSINSKI, Garrett, Valley City, 44280 (US); KUCERA, Jeff, Valley City, 44280 (US)
(74) Representative: SBD IPAdmin

(57) **Abstract**

A residential utility vehicle having a frame, a set of drive elements, a first drive motor operationally engaged with a drive element and adapted to provide work thereto to drive or turn the vehicle, a battery operationally engaged with the first drive motor and adapted to provide electrical energy thereto, a user platform operationally engaged with the frame, a flat bed engaged with the frame and adapted for conveying cargo or equipment while the vehicle is in motion, a set of user controls adapted to receive input from the associated standing user, and a utility device operationally engaged with the frame. The set of user controls is sufficient to provide steering, acceleration, and braking commands to the vehicle and is movable with respect to the frame. The user platform defines a surface adapted to convey an associated standing user while said vehicle is in operation.

## Description

### FIELD OF DISCLOSURE

The disclosed subject matter pertains to apparatuses and methods for powered utility vehicles for residential applications. More specifically the disclosed subject matter pertains to apparatuses and methods for battery-powered utility vehicles for residential applications.

### BACKGROUND

Manufacturers of vehicles for utility applications offer many types of machines. Generally, these machines can have a variety of forms depending on application, from general urban or suburban lawn maintenance, rural farm and field maintenance, to specialty applications. Battery-powered utility vehicles for residential applications may have some particular required or desirable features.

Battery-powered utility vehicles for residential applications may include equipment adapted to perform or assist with mowing, trimming, edging, blowing, chipping, spreading, spraying, vacuuming, raking, tilling, or other tasks of interest to a residential user in and around a home and garden. While the uses and applications for a battery-powered utility vehicle for residential applications may be numerous, there are some common requirements that continue to present challenges.

It remains desirable to develop battery powered utility vehicles for residential applications small enough to be readily stowed, lightweight enough for a single residential user to move and handle when unpowered, or both, and still be capable of powering and deploying a wide variety of tools and systems.

### SUMMARY

In an aspect of the invention, there is provided a residential utility vehicle comprising a frame. The frame has: a frame front and a frame rear offset from the frame front in a depth direction by a frame depth; a frame right and a frame left offset from the frame right in a width direction by a frame width; and a frame top and a frame bottom offset from the top in a height direction by a frame height. The residential utility vehicle further comprises: a set of drive elements operationally engaged with the frame and adapted to operate to convey the vehicle over a surface; a first drive motor operationally engaged with a drive element and adapted to provide work thereto to drive or turn the vehicle; a battery operationally engaged with the first drive motor and adapted to provide electrical energy thereto; a user platform operationally engaged with the frame, the user platform defining a surface adapted to convey an associated standing user while said vehicle is in operation; a flat bed engaged with the frame and adapted for conveying cargo or equipment while the vehicle is in motion; a set of user controls adapted to receive input from the associated standing user sufficient to provide steering, acceleration, and braking commands to the vehicle, wherein the set of user controls is movable with respect to the frame; and a utility device operationally engaged with the frame.

The utility device may comprise: a mower; a trimmer; an edger; a blower; a chipper; a broadcast spreader; a sprayer; a wood splitter; a vacuum; an aerator; a de-thatcher; a power rake; a tiller; a paint striper; a chalk striper; an electromagnet; a pump; a plow; a power shovel; a power washer; or a power brush. The utility device may comprise a mower.

The set of drive elements may comprise a set of drive wheels having a first drive wheel and a second drive wheel. The set of drive elements may comprise a set of tracked treads having a first tracked tread and a second tracked tread.

The set of user controls may be movable with respect to the frame along a set of telescopable supports. The set of user controls may be movable with respect to the frame along a set of supports that are rotatable with respect to the vehicle. The set of user controls may be selectably locked in a position selected among any of a variety of user selectable positions.

The residential utility vehicle may further comprise a lamp. The lamp may be engaged with a height adjustable arm or tower adapted to permit selective adjustment of the height, position, and orientation of the lamp with respect to the vehicle. The lamp may be adapted to output white light, red light, blue light, or light of another color. The lamp may be adapted to selectable focus the output light at a user desired point. The lamp may be adapted to output ultraviolet. The lamp may be adapted to selectable focus the output ultraviolet at a user desired point.

The flat bed may be engaged with a height adjustable arm or tower adapted to permit selective adjustment of the height, position, and orientation of the flat bed with respect to the vehicle.

The residential utility vehicle may further comprise a stabilizer or outrigger adjustable between a deployed position adapted to hold the vehicle in place and a stowed position adapted to permit the vehicle to be driven.

The residential utility vehicle may further comprise seating for one or more passengers.

The residential utility vehicle may further comprise a tank, bottle, reservoir or other liquid storage operationally engaged with a sprayer.

The residential utility vehicle may further comprise a barrow, bin, hopper, or other dry storage operationally engaged with a dump assist.

The residential utility vehicle may further comprise electrical power supply connections operationally engaged with the battery.

The residential utility vehicle may further comprise an electrical power inverter and outlet adapted to supply AC power.

The residential utility vehicle may further comprise an electromagnetic suspension.

The residential utility vehicle may further comprise a thermoelectric (Peltier) module operationally engaged with a user interface and adapted to selectably heat or cool the user interface.

The residential utility vehicle may further comprise a peg board or other surface adapted for connection of a modular rack, modular bin, modular tool holder, or other modular storage.

The user platform may be operationally engaged with a stabilization system. The stabilization system may comprise a set of gimbals.

The residential utility vehicle may have one or more compartments having access that is interlocked with the vehicle drive system.

The residential utility vehicle may have an automated stowage mode during which the vehicle will automatically adjust between a stowed configuration and a deployed configuration.

In an aspect of the invention, there is provided a residential utility vehicle, comprising a frame. The frame has: a frame front and a frame rear offset from the frame front in a depth direction by a frame depth; a frame right and a frame left offset from the frame right in a width direction by a frame width; and a frame top and a frame bottom offset from the top in a height direction by a frame height. The residential utility vehicle further comprises: a set of drive wheels operationally engaged with the frame and adapted to operate to convey the vehicle over a surface; a first drive motor operationally engaged with a drive wheel and adapted to provide work thereto to drive or turn the vehicle; a user removable battery operationally engaged with the first drive motor and adapted to provide electrical energy thereto; a user platform operationally engaged with the frame, the user platform defining a surface adapted to convey an associated standing user while said vehicle is in operation; a flat bed engaged with the frame and adapted for conveying cargo or equipment while the vehicle is in motion; a set of user controls adapted to receive input from the associated standing user sufficient to provide steering, acceleration, and braking commands to the vehicle, wherein the set of user controls is movable with respect to the frame; a mower operationally engaged with the frame; and wherein the set of user controls is movable with respect to the frame along a set of telescopable supports.

The residential utility vehicle may have one or more compartments having access that is interlocked with the vehicle drive system.

The residential utility vehicle may have an automated stowage mode during which the vehicle will automatically adjust between a stowed configuration and a deployed configuration.

In an aspect of the invention, there is provided a residential utility vehicle, comprising a frame. The frame has: a frame front and a frame rear offset from the frame front in a depth direction by a frame depth; a frame right and a frame left offset from the frame right in a width direction by a frame width; and a frame top and a frame bottom offset from the top in a height direction by a frame height. The residential utility vehicle further comprises: a set of drive elements operationally engaged with the frame and adapted to operate to convey the vehicle over a surface; a first drive motor operationally engaged with a drive element and adapted to provide work thereto to drive or turn the vehicle; a battery operationally engaged with the first drive motor and adapted to provide electrical energy thereto; a user platform operationally engaged with the frame, the user platform defining a surface adapted to convey an associated standing user while said vehicle is in operation; a set of user controls adapted to receive input from the associated standing user sufficient to provide steering, acceleration, and braking commands to the vehicle, wherein the set of user controls is movable with respect to the frame; and a utility device operationally engaged with the frame.

The utility device may comprise: a mower; a trimmer; an edger; a blower; a chipper; a broadcast spreader; a sprayer; a wood splitter; a vacuum; an aerator; a de-thatcher; a power rake; a tiller; a paint striper; a chalk striper; an electromagnet; a pump; a plow; a power shovel; a power washer; or a power brush. The utility device may comprise a mower.

The set of drive elements may comprise a set of drive wheels having a first drive wheel and a second drive wheel. The set of drive elements may comprise a set of tracked treads having a first tracked tread and a second tracked tread.

In an aspect of the invention, there is provided a residential utility vehicle having a frame, a set of drive elements, a first drive motor operationally engaged with a drive element and adapted to provide work thereto to drive or turn the vehicle, a battery operationally engaged with the first drive motor and adapted to provide electrical energy thereto, a user platform operationally engaged with the frame, a flat bed engaged with the frame and adapted for conveying cargo or equipment while the vehicle is in motion, a set of user controls adapted to receive input from the associated standing user, and a utility device operationally engaged with the frame. The set of user controls is sufficient to provide steering, acceleration, and braking commands to the vehicle and is movable with respect to the frame. The user platform defines a surface adapted to convey an associated standing user while said vehicle is in operation.

In an aspect of the invention, there is provided a residential utility vehicle having a frame; a set of drive wheels operationally engaged with the frame and adapted to operate to convey the vehicle over a surface; a first drive motor operationally engaged with a drive wheel and adapted to provide work thereto to drive or turn the vehicle; a user removable battery operationally engaged with the first drive motor and adapted to provide electrical energy thereto; a user platform operationally engaged with the frame, the user platform defining a surface adapted to convey an associated standing user while said vehicle is in operation; a flat bed engaged with the frame and adapted for conveying cargo or equipment while the vehicle is in motion; a set of user controls adapted to receive input from the associated standing user sufficient to provide steering, acceleration, and braking commands to the vehicle, wherein the set of user controls is movable with respect to the frame; a mower operationally engaged with the frame; and wherein the set of user controls is movable with respect to the frame along a set of telescopable supports.

To accomplish the foregoing and related ends, certain illustrative aspects of the disclosure are described herein in connection with the following description and the drawings. These aspects are indicative, however, of but a few of the various ways in which the principles of the disclosure can be employed and the subject disclosure is intended to include all such aspects and their equivalents. Other advantages and features of the disclosure will become apparent from the following detailed description of the disclosure when considered in conjunction with the drawings.

### BRIEF DESCRIPTION OF THE DRAWINGS

FIG. 1 depicts a plurality of views and configurations of a first non-limiting example of a battery-powered utility vehicle for residential applications.
FIG. 1A depicts an oblique view of the first non-limiting example of a battery-powered utility vehicle for residential applications of FIG. 1.
FIG. 1B depicts a plurality of views of the first non-limiting example of a battery-powered utility vehicle for residential applications of FIG. 1 in different configurations.
FIG. 1C depicts a side view of the first non-limiting example of a battery-powered utility vehicle for residential applications of FIG. 1.
FIG. 2 depicts a plurality of views and configurations of a second non-limiting example of a battery-powered utility vehicle for residential applications.
FIG. 2A depicts an oblique view of the second non-limiting example of a battery-powered utility vehicle for residential applications of FIG. 2.
FIG. 2B depicts a plurality of views of the second non-limiting example of a battery-powered utility vehicle for residential applications of FIG. 2 in different configurations.
FIG. 2C depicts an oblique view of the second non-limiting example of a battery-powered utility vehicle for residential applications of FIG. 2.
FIG. 3 depicts a plurality of views and configurations of a third non-limiting example of a battery-powered utility vehicle for residential applications.
FIG. 3A depicts an oblique view of the third non-limiting example of a battery-powered utility vehicle for residential applications of FIG. 3.
FIG. 3B depicts a plurality of superimposed views of the third non-limiting example of a battery-powered utility vehicle for residential applications of FIG. 3 in different configurations.
FIG. 4 depicts a plurality of views and configurations of a fourth non-limiting example of a battery-powered utility vehicle for residential applications.
FIG. 4A depicts an oblique view of the fourth non-limiting example of a battery-powered utility vehicle for residential applications of FIG. 4.
FIG. 4B depicts a side view of the fourth non-limiting example of a battery-powered utility vehicle for residential applications of FIG. 4 in different configurations.
FIG. 4C depicts a close up oblique view of the fourth non-limiting example of a battery-powered utility vehicle for residential applications of FIG. 4.
FIG. 5 is a block diagram of the vehicle.

The same reference numbers are generally used to refer to corresponding or similar features in the different embodiments, except where clear from context that same reference numbers refer to disparate features. The drawings and description are to be regarded as illustrative in nature and not as restrictive.

While embodiments of the disclosure pertaining to a battery-powered utility vehicle for residential applications are described herein, it should be understood that the disclosed machines, electronic apparatus and computing devices and methods are not so limited and modifications may be made without departing from the scope of the present disclosure. The scope of the machines, apparatuses, methods, and devices are defined by the appended claims, and all devices, processes, and methods that come within the meaning of the claims, either literally or by equivalence, are intended to be embraced therein.

### DETAILED DESCRIPTION

The following terms are used throughout the description, the definitions of which are provided herein to assist in understanding various aspects of the subject disclosure.

As used in this application, the terms "outdoor power equipment", "outdoor power equipment machine", "power equipment", "maintenance machine", "power equipment machine", and "utility vehicle" are used interchangeably and are intended to refer to any of robotic, partially robotic ride-on, walk-behind, stand-on, sulky equipped, autonomous, semi-autonomous (e.g., user-assisted automation), remote control, or multi-function variants of any of the following: powered carts and wheelbarrows, lawn mowers, lawn and garden tractors, lawn trimmers, lawn edgers, lawn and leaf blowers or sweepers, hedge trimmers, pruners, loppers, chainsaws, rakes, pole saws, tillers, cultivators, aerators, log splitters, post hole diggers, trenchers, stump grinders, snow throwers (or any other snow or ice cleaning or clearing implements), lawn, wood and leaf shredders and chippers, lawn and/or leaf vacuums, pressure washers, lawn equipment, garden equipment, driveway sprayers and spreaders, and sports field marking equipment.

As utilized herein, relative terms or terms of degree such as approximately, substantially, about, roughly and so forth, are intended to incorporate ranges and variations about a qualified term reasonably encountered by one of ordinary skill in the art in fabricating or compiling the embodiments disclosed herein, where not explicitly specified otherwise. For instance, a relative term can refer to ranges of manufacturing tolerances associated with suitable manufacturing equipment (e.g., injection molding equipment, extrusion equipment, metal stamping equipment, and so forth) for realizing a mechanical structure from a disclosed illustration or description. In some embodiments, depending on context and the capabilities of one of ordinary skill in the art, relative terminology can refer to a variation in a disclosed value or characteristic, *e.g.,* a 0 to five-percent variance or a zero to ten-percent variance from precise mathematically defined value or characteristic (which is included in the range), or any suitable value or range there between can define a scope for a disclosed term of degree. As an example, a power equipment device can have an operating dimension, such as a heading measurement, average velocity estimate, relative position estimate, or the like, with a variance of 0 to five percent or 0 to ten percent. As another example, a disclosed mechanical dimension can have a variance of suitable manufacturing tolerances as would be understood by one of ordinary skill in the art, or a variance of a few to several percent about the disclosed mechanical dimension that would also achieve a stated purpose or function of the disclosed mechanical dimension. These or similar variances can be applicable to other contexts in which a term of degree is utilized herein such as relative position of a disclosed element, speed of a disclosed motor in rotations per minute (or other suitable metric), accuracy of measurement of a physical effect (*e.g.,* a heading measurement, an acceleration measurement, a relative velocity, *etc*.) or the like. In addition to the foregoing, it should be understood that the drawings appended to this specification are not drawn to scale, unless explicitly stated in the description herein or on the drawing.

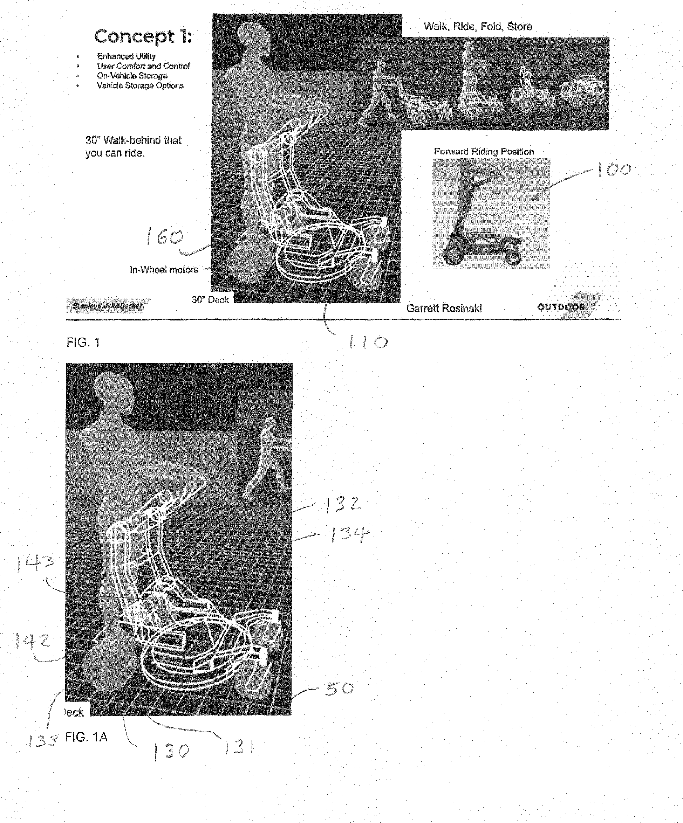

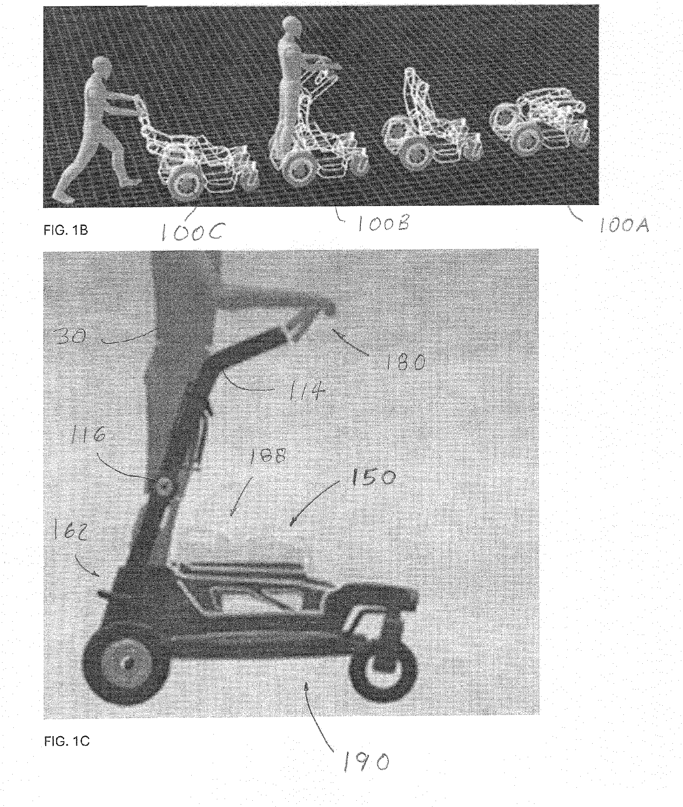

Referring now to FIGS. 1-1C, shown are a plurality of views and configurations of a first non-limiting example of a battery-powered utility vehicle 100 for residential applications. The first embodiment of the battery-powered utility vehicle 100 has a frame 110; a set of drive elements 130 operationally engaged with the frame 110 and adapted to operate to convey the vehicle over a surface 50; a first drive motor 142 operationally engaged with a drive element, such as and without limitation, first drive element 131, and adapted to provide work thereto to drive or turn the vehicle 100; a battery 150 operationally engaged with the first drive motor and adapted to provide electrical energy thereto; a user platform 160 operationally engaged with the frame 110; a set of user controls 180 adapted to receive input from an associated user sufficient to provide steering, acceleration, and braking commands to the vehicle 100; and a utility device 190 operationally engaged with the frame 110.

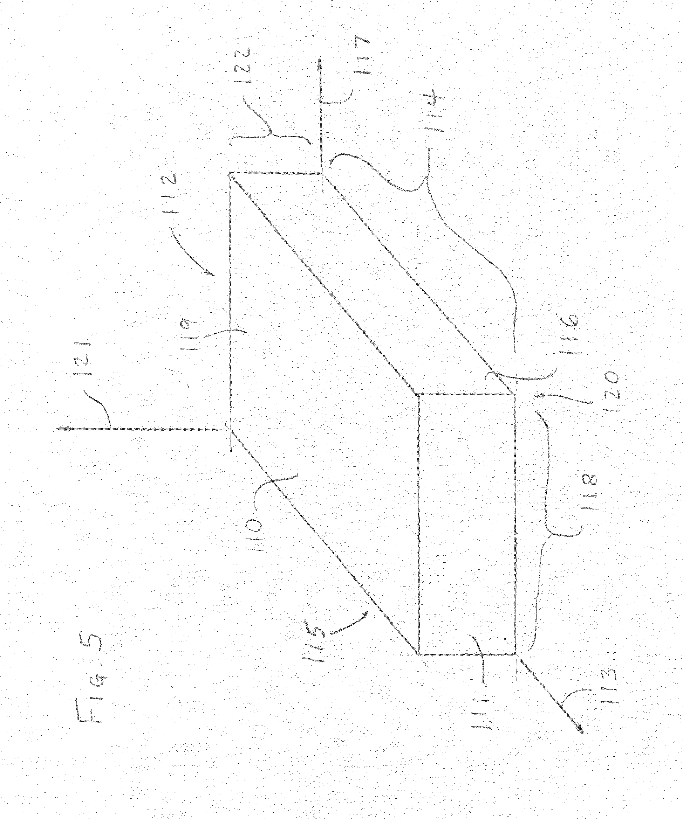

With additional reference now to FIG. 5, the frame 110 defines a frame front 111 and a frame rear 112 offset from the frame front 111 in a depth direction 113 by a frame depth 114. The frame 110 defines a frame right 115 and a frame left 116 (both from the perspective of an associated user facing in the depth direction) offset from the frame right 115 in a width direction 117 by a frame width 118. The frame 110 defines a frame top 119 and a frame bottom 120 offset from the frame top 119 in a height direction 121 by a frame height 122. Generally, the frame is a structure adapted to hold the components operationally engaged therewith in position relative to one another such that the loads typical to operation do not result in sufficient deflection or displacement to interfere with desired performance. The frame construction and components typical to a small residential service vehicle would apply to the battery-powered utility vehicle 100. In some non-limiting embodiments, the frame is composed primarily of steel beams or steel sheets; but a frame composed of other materials is also contemplated.

With continued reference to FIGS. 1-1C, the set of drive elements 130 may comprise wheels or track drives. In the non-limiting embodiment shown in FIGS 1-1C, the set of drive elements 130 include a first drive element 131 and a second drive element 132. First drive element 131 and second drive element 132, are depicted respectively as first drive wheel 133 and second drive wheel 134. As used herein, a wheel may comprise a pneumatic tire or a non-pneumatic tire.

With continued reference to FIGS. 1-1C, the first drive motor 142 is an electric motor adapted to receive electrical energy from the battery 150 and output mechanical work to one or more drive elements, such as drive element 131 or drive element 132. In some non-limiting embodiments, the first drive motor 142 is one motor of a set of drive motors 140 comprising the first drive motor 142, and a second drive motor 143. A drive motor may be a stepper motor, a servo motor, or another motor chosen with good engineering judgment. In some non-limiting embodiments, each drive element may be a drive wheel engaged with an in-wheel drive motor. For example, first drive wheel 133 may be operationally engaged with first drive motor 142 that is an in-wheel motor and second drive wheel 134 may be operationally engaged with second drive motor 143 that is an in-wheel drive motor. In wheel motors may be of interest in providing space for the user platform 160.

With continued reference to FIGS. 1-1C, the battery 150 is adapted to store energy and outputs electrical energy. The battery may be rechargeable, removable, or disposable. In some embodiments it is contemplated that the battery 150 may be adapted to be readily changed out for a fresh battery by a user. The battery 150 may be a lithium-ion battery, a nickel-cadmium battery, or otherwise as chosen with good engineering judgment. In some embodiments, the battery may be dedicated to providing vehicle power for drive, steering, controller operation, lights, etc., but this is not limiting and in some embodiments the battery may be operationally engaged with one or more electrical power supply connections such as a DC outlet or an inverter or an AC outlet, and/or to devices connected therethrough such as, and without limitation, a tool, a cell phone, a speaker, an electrically refrigerated cooler, or otherwise. In some embodiments having electrical power supply connections such as a DC outlet or an inverter or an AC outlet, the connection points are shrouded in a selectably openable weatherproof or water resistant enclosure that is optionally lockable or interlocked with the drive system as noted below.

With continued reference to FIGS. 1-1C, the user platform 160 provides a location for an associated user 30 to stand while riding on the vehicle 100 and which supports the associated user while the vehicle 100 is in motion. In some embodiments, the user platform 160 is over or between the first drive element 131 and second drive element 132. In some embodiments the user platform 160 may be operationally engaged with one or more load cells 162 adapted to produce a signal indicative of the load, or weight or force on the user platform 160 and to communicate with a controller 188 to determine if an overload condition exists wherein the load, weight, or force exceeds a set limit. In some embodiments, in the event an overload condition exists, the controller 188 may produce an output that activates an overload alert signal, or activates an interlock that prevent operation to drive the vehicle until the overload condition is eliminated, or both, or otherwise responds as determined by good engineering judgment. Because dynamic loads during operation may exceed static loads, it is contemplated that in some embodiments and usage conditions, an overload condition may exist only during operations in which the vehicle is driven ("dynamic overload"): one response to a dynamic overload condition may be to activate an override that slows the vehicle until it stops or the dynamic overload condition is otherwise eliminated.

With continued reference to FIGS. 1-1C, the set of user controls 180 comprises one or more input devices adapted to receive input from an associated user. Such input devices may comprise, a joystick, a handle bar, a steering knob, steering wheel, paddles, switches, buttons, touch screen or otherwise as chosen with good engineering judgment. In some embodiments, the set of user controls 180 may be movable with respect to the frame 110. In some embodiments, the user controls may be engaged with a set of supports 114 that can be selectably fixed or locked in one of a variety of user selectable positions or orientations with respect to the frame 110. In the non-limiting embodiment shown in FIGS 1-1C, as well as that shown in 3-3B, the set of user controls 180 is engaged with a set of supports 114 that are adapted to be selectably rotated about one or more axes 116 to permit the supports to move between a stowed configuration 100A, a standon operational configuration 100B, and a walk-behind operational configuration 100C. In some embodiments, the supports are adapted to be selectably rotated about one or more axes 116 manually by an associated user; in other embodiments it is contemplated that the supports may be adapted to be selectably rotated about one or more axes 116 automatically by one or more stepper motors such that adjustment between configurations may be done automatically or remotely or both.

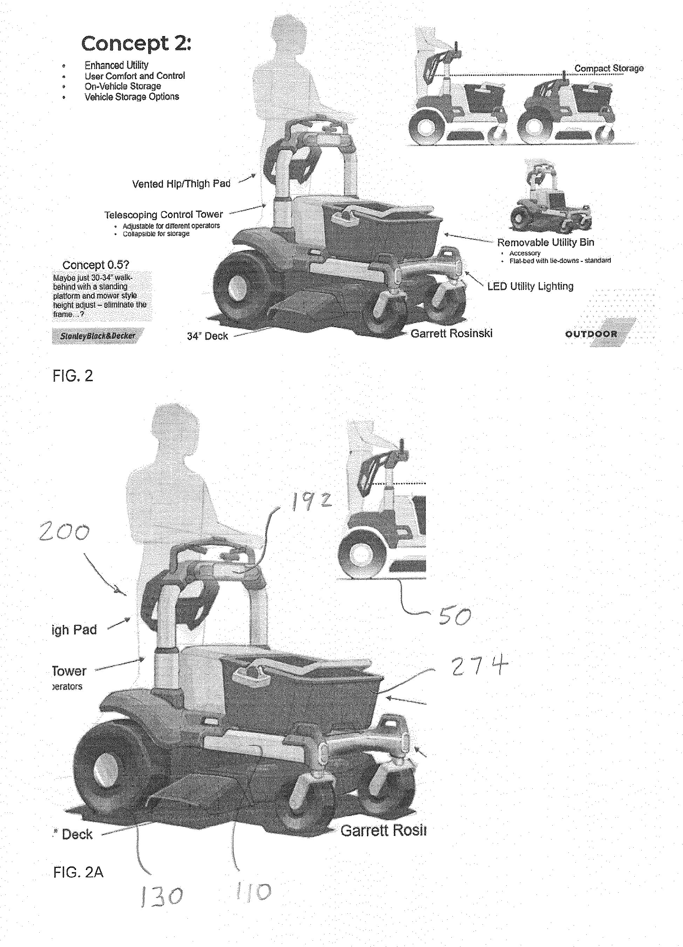

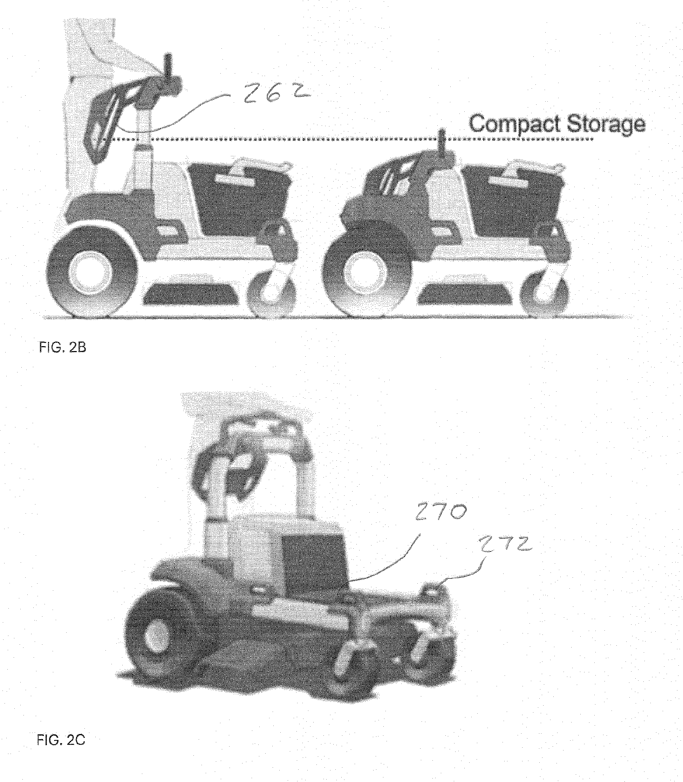

With continued reference to FIGS. 1-1C, the utility device 190 may comprise a mower; a trimmer; an edger; a blower; a chipper; a broadcast spreader; a sprayer; a wood splitter; a vacuum; an aerator; a dethatcher; a power rake; a tiller; a paint striper; a chalk striper; an electromagnet; a pump; a plow; a power shovel; a power washer; a power brush; or some combination thereof. With additional reference to FIGS. 2-4C, in some embodiments, the vehicle 100 is adapted for use with a utility device adapted for modular operational engagement. As used herein, and unless otherwise noted, modular operational engagement means having sufficiently similar mechanical and electrical connection engagement requirements that the utility vehicle may operationally engage interchangeably any one of various of utility devices at the one connection such that a first utility device may be readily swapped out by an associated user for a different second utility device.

With reference now to FIGS. 2-2C, shown are a plurality of views and configurations of a second non-limiting example of a battery-powered utility vehicle 200 for residential applications. It should be understood that battery-powered utility vehicle 200 is similar in many ways to the battery-powered utility vehicle 100 described above and may comprise multiple similar components. The second embodiment of the battery-powered utility vehicle 200 has a frame 110; a set of drive elements 130 operationally engaged with the frame 110 and adapted to operate to convey the vehicle over a surface 50; a first drive motor 142 operationally engaged with a drive element, such as and without limitation, first drive element 131, and adapted to provide work thereto to drive or turn the vehicle 100; a battery 150 operationally engaged with the first drive motor and adapted to provide electrical energy thereto; a user platform 160 operationally engaged with the frame 110; a flat bed 170 engaged with the frame; a set of user controls 180 adapted to receive input from an associated user sufficient to provide steering, acceleration, and braking commands to the vehicle 100; and a utility device 190 operationally engaged with the frame 110.

With continued reference now to FIGS. 2-2C, the flat bed 270 is adapted to support a cargo container 274 such as a bin, tool box, other container for dry goods or materials, tank, bottle, reservoir, or other container for liquids or wet materials, while the vehicle is in operation. In some embodiments the flat bed 270 may comprise a set of engagement elements 272 adapted to connect with a cargo container to hold it, or to engage with one or more fastening components (not shown) to fasten the cargo container to the vehicle 200. For example and without limitation, the set of fastening elements may comprise a lock, a latch, a hook, or an aperture.

In some embodiments the flat bed 270 may be operationally engaged with one or more load cells adapted to produce a signal indicative of the load, or weight or force on the flat bed 270 and to communicate with a controller 188 to determine if an overload condition exists wherein the load, weight, or force exceeds a set limit. In some embodiments, in the event an overload condition exists, the controller 188 may produce an output that activates an overload alert signal, or activates an interlock that prevent operation to drive the vehicle until the overload condition is eliminated, or both, or otherwise responds as determined by good engineering judgment. Because dynamic loads during operation may exceed static loads, it is contemplated that in some embodiments and usage conditions, an overload condition may exist only during operations in which the vehicle is driven: one response to an overload condition may be to activate an override that slows the vehicle until it stops or the overload condition is eliminated.

With continued reference now to FIGS. 2-2C, the flat bed 270 may be operationally engaged with a height adjustable arm or tower to permit an associated user to selectably adjust the height, position and orientation of the flat bed 270 with respect to the vehicle 200. This latter adjustment may be helpful to use the flat bed 270 as a work bench, planting bench, medical examination or treatment table, or display for a blueprint, diagram, map or other document.

As noted above, in some embodiments the flat bed 270 may support a tank, bottle, reservoir or other liquid storage container. In some aspects of the latter embodiment, the tank, bottle, reservoir or other liquid storage container is operationally engaged with a sprayer or other liquid distribution device chosen with good engineering judgment.

As noted above, in some embodiments the flat bed 270 may support a barrow, bin, hopper, or other dry storage container. In some aspects of the latter embodiment, the barrow, bin, hopper, or other dry storage container is operationally engaged with a dump assist, broadcast spreader, or other dry material distribution device chosen with good engineering judgment.

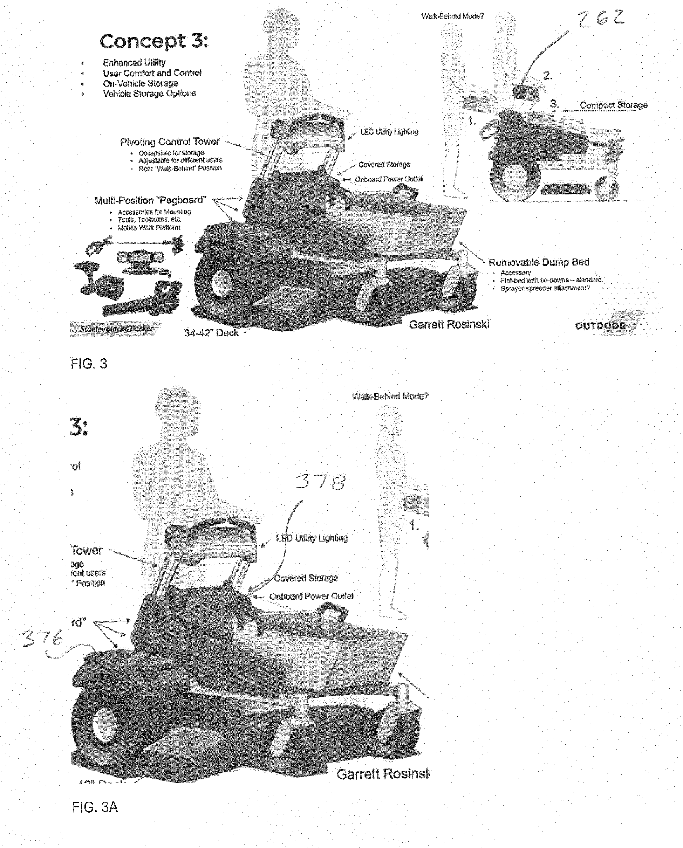

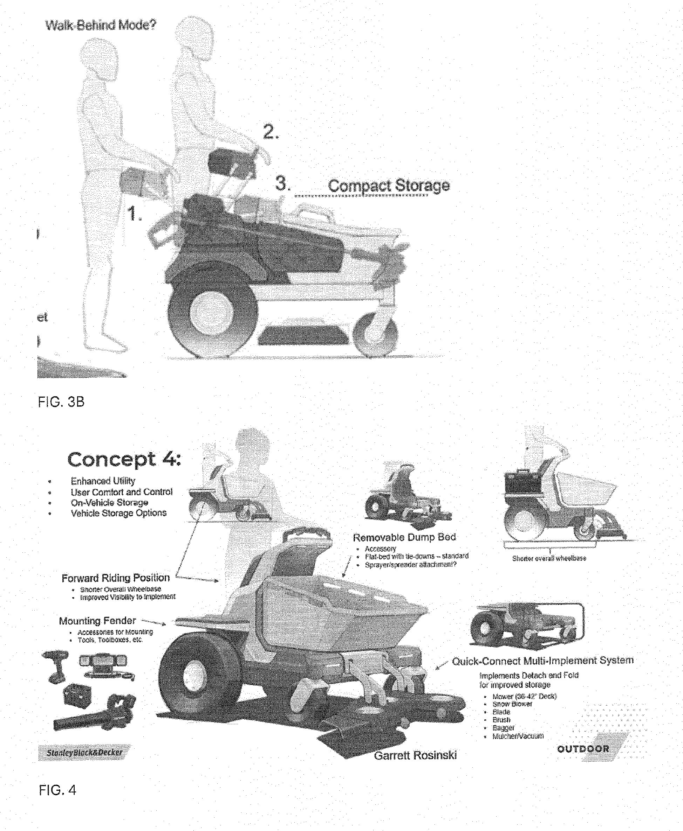

With continued reference now to FIGS. 2-2C, and with additional reference to FIGS. 3-3B the user platform 160 may be proximate to one or more user comfort elements such as a user rest 262 adapted to support an associated user as he leans onto it. The user rest 262 may take any of a variety of forms that are suitable to support an associated user leaning against it. A user comfort element may also comprise a cup or bottle holder or grip. In some embodiments, the user comfort element, such as and without limitation, user rest 262, may comprise one or more apertures, holes, or slots. In some embodiments the user comfort element, such as and without limitation, user rest 262, may be heated or cooled such as by a thermoelectric cell or resistive heater. In some embodiments the user comfort element, such as and without limitation, user rest 262, may have powered air flow, such as from a fan or blower, directed at or through it.

With continued reference now to FIGS. 2-2C, the set of user controls 180 may be movable with respect to the frame 110. In some embodiments, the user controls 180 may be engaged with a set of supports 114 that are telescopable and can be selectably fixed or locked in one of a variety of user selectable positions with respect to the frame 110. In the non-limiting embodiment shown in FIG 2-2C and particularly in FIG. 2B, the set of user controls 180 is engaged with a set of supports 114 that are adapted to telescope to permit the supports to move between a stowed configuration and a stand on operational configuration. In some embodiments, the supports are adapted to be selectably adjusted manually by an associated user; in other embodiments it is contemplated that the supports may be adapted to be selectably moved automatically by one or more actuators such that adjustment between configurations may be done automatically or remotely or both.

With continued reference now to FIGS. 2-2C, 3-3B, and 4-4C, in some non-limiting embodiments, the vehicle 200 may comprise a lamp 192 or a plurality of lamps. As shown in FIG. 2A, a lamp can be a head lamp, but can also be lamp on an adjustable support, such as an arm or tower, permitting selective adjustment of the height, position, or orientation of the lamp with respect to the vehicle. In some embodiments the lamp 192 may be a work lamp or signal lamp. A lamp may be adapted to output white light, red light, blue light or light of another color. In some embodiments, the lamp may be adapted to focus output light at a point selected by an associated user. In some embodiments, the lamp may be adapted to output ultraviolet radiation. In some embodiments, the lamp may be adapted to focus output ultraviolet radiation at a point selected by an associated user. In some embodiments the output light or ultraviolet radiation may be focused by a set of waveplates selected for use with the frequency of the light or ultraviolet radiation and which are rotatable with respect to one another to change the resulting focal length.

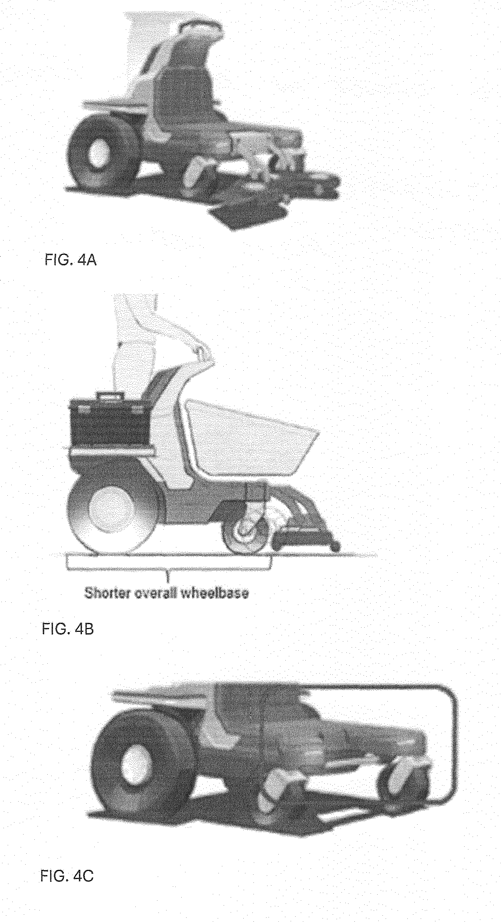

With reference now to FIGS 3-3B, and 4-4C in some embodiments the vehicle 200 may comprise a platform 376 or board for mounting one or more accessories, tools, toolboxes, seating adapted for one or more passengers or patients, or otherwise as chosen with good engineering judgment.

With reference now to FIGS 1-4C, in any of the embodiments, the vehicle may comprise a vehicle suspension comprising one or more springs or dampers or both. In some embodiments a vehicle suspension may comprise one or more electromagnetic suspension components. In some embodiments, an electromagnetic suspension component may be tunable to change its suspension properties or performance to reflect the gross weight of the vehicle with user and cargo, or active loading, or otherwise as chosen with good engineering judgment.

With reference now to FIGS 1-4C, in any of the embodiments, a user platform may be operationally engaged with a stabilization system. In certain aspects in which the user platform is operationally engaged with a stabilization system, the stabilization system may comprise a set of gimbals.

The residential utility vehicle may comprise a set of stabilizers or outriggers. A set of stabilizers or outriggers is adjustable between a deployed position adapted to hold the vehicle in place and a stowed position adapted to permit the vehicle to be driven. In some embodiments comprising a set of stabilizers or outriggers, the set of stabilizers or outriggers may be interlocked with the vehicle drive system such that the vehicle drive will not function unless the set of stabilizers or outriggers is in the stowed position and the set of stabilizers or outriggers will not adjust from the stowed position unless the vehicle is stopped.

With reference now to FIGS 1-4C, but particularly with respect to FIG. 3A, in any of the embodiments, the vehicle 200 may comprise one or more storage compartments 378 accessible through a hatch. As noted above, such compartments 378 may be weatherproof or water resistant and may contain or protect one or more power connections or outlets therein. In some embodiments comprising a storage compartment accessible through a hatch, the hatch may be lockable. In some embodiments comprising a hatch that is lockable the hatch lock may be interlocked with the vehicle drive system such that the vehicle drive will not function with the hatch open and the hatch will not open unless the vehicle is stopped. Such a hatch may be useful to secure the battery or other components of the vehicle. In some embodiments as shown in FIG. 3 and FIG. 3A the vehicle 200 may comprise a peg board or plurality of peg boards or similar surface adapted for connection of a modular rack, modular bin, modular tool holder, or other modular storage. In addition or in the alternative, the latter peg board may be adapted for use as a work surface and may be further adapted for modular connection of accessories typical to a work surface or work bench such as a vice, a clamp, a guide, locator pegs, or otherwise as chosen with good engineering judgment.

With reference now to FIGS 1-3B, in embodiments in which the vehicle is configurable in a multitude of ways including a stowed configuration and a deployed configuration, the adjustable components which are changed when changing the configuration of the vehicle may be automatically adjustable using an operationally engaged stepper motor such that the vehicle may have an automated stowage mode during which the vehicle will automatically adjust between a stowed configuration and a deployed configuration.

In regard to the various functions performed by the above described components, machines, devices, processes and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the embodiments. In this regard, it will also be recognized that the embodiments may include a system as well as electronic hardware configured to implement the functions, or a computer-readable medium having computer-executable instructions for performing the acts or events of the various processes.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In other embodiments, combinations or sub-combinations of the above disclosed embodiments can be advantageously made. The block diagrams of the architecture and flow charts are grouped for ease of understanding. However, it should be understood that combinations of blocks, additions of new blocks, rearrangement of blocks, and the like are contemplated in alternative embodiments of the present disclosure.

It is also understood that the examples and embodiments described herein are for illustrative purposes only and that various modifications or changes falling within the scope of the appended claims will be suggested to persons skilled in the art.

## Claims

1. A residential utility vehicle, comprising:
a frame, the frame having
a frame front and a frame rear offset from the frame front in a depth direction by a frame depth,
a frame right and a frame left offset from the frame right in a width direction by a frame width, and
a frame top and a frame bottom offset from the top in a height direction by a frame height;
a set of drive elements operationally engaged with the frame and adapted to operate to convey the vehicle over a surface;
a first drive motor operationally engaged with a drive element and adapted to provide work thereto to drive or turn the vehicle;
a battery operationally engaged with the first drive motor and adapted to provide electrical energy thereto;
a user platform operationally engaged with the frame, the user platform defining a surface adapted to convey an associated standing user while said vehicle is in operation;
a flat bed engaged with the frame and adapted for conveying cargo or equipment while the vehicle is in motion;
a set of user controls adapted to receive input from the associated standing user sufficient to provide steering, acceleration, and braking commands to the vehicle, wherein the set of user controls is movable with respect to the frame; and
a utility device operationally engaged with the frame.

2. The residential utility vehicle of claim 1, wherein the utility device comprises:
a mower;
a trimmer;
an edger;
a blower;
a chipper;
a broadcast spreader;
a sprayer;
a wood splitter;
a vacuum;
an aerator;
a de-thatcher;
a power rake;
a tiller;
a paint striper;
a chalk striper;
an electromagnet;
a pump;
a plow;
a power shovel;
a power washer; or
a power brush.

3. The residential utility vehicle of any one of the preceding claims, wherein the set of drive elements comprises a set of drive wheels having a first drive wheel and a second drive wheel, or wherein the set of drive elements comprises a set of tracked treads having a first tracked tread and a second tracked tread.

4. The residential utility vehicle of any one of the preceding claims, wherein the set of user controls is movable with respect to the frame along a set of telescopable supports, or wherein the set of user controls is movable with respect to the frame along a set of supports that are rotatable with respect to the vehicle.

5. The residential utility vehicle of claim 4, wherein the set of user controls are selectably lockable in a position selected among any of a variety of user selectable positions.

6. The residential utility vehicle of any one of the preceding claims, further comprising a lamp engaged with a height adjustable arm or tower adapted to permit selective adjustment of the height, position, and orientation of the lamp with respect to the vehicle.

7. The residential utility vehicle of any one of the preceding claims, wherein the flat bed is engaged with a height adjustable arm or tower adapted to permit selective adjustment of the height, position, and orientation of the flat bed with respect to the vehicle.

8. The residential utility vehicle of any one of the preceding claims, further comprising a stabilizer or outrigger adjustable between a deployed position adapted to hold the vehicle in place and a stowed position adapted to permit the vehicle to be driven.

9. The residential utility vehicle of any one of the preceding claims, further comprising a tank, bottle, reservoir or other liquid storage operationally engaged with a sprayer.

10. The residential utility vehicle of any one of the preceding claims, further comprising a barrow, bin, hopper, or other dry storage operationally engaged with a dump assist.

11. The residential utility vehicle of any one of the preceding claims, further comprising an electrical power inverter and outlet adapted to supply AC power.

12. The residential utility vehicle of any one of the preceding claims, further comprising a peg board or other surface adapted for connection of a modular rack, modular bin, modular tool holder, or other modular storage.

13. The residential utility vehicle of any one of the preceding claims, wherein the user platform is operationally engaged with a stabilization system, optionally wherein the stabilization system comprises a set of gimbals.

14. The residential utility vehicle of any one of the preceding claims, further comprising one or more compartments having access that is interlocked with the vehicle drive system.

15. The residential utility vehicle of any one of the preceding claims, having an automated stowage mode during which the vehicle will automatically adjust between a stowed configuration and a deployed configuration.
